# EUROPEAN PATENT SPECIFICATION

(11) **EP 2 333 385 B1**
(45) Date of publication and mention of the grant of the patent: **25.01.2017**
(21) Application number: 09178589.9
(22) Date of filing: 10.12.2009
(51) Int. Cl.: F16K 1/44, F16K 11/18

(54) **Double-seat valve**
Doppelsitzventil
Robinet à double siège

(43) Date of publication of application: 15.06.2011
(73) Proprietor: Alfa Laval Corporate AB, 221 00 Lund (SE)
(72) Inventor: Nielsen, Jesper Bak, 6000, Kolding (DK)
(74) Representative: Alfa Laval Attorneys

(56) References cited:
- EP-A1- 0 646 741
- EP-A2- 0 090 090
- EP-A2- 0 819 876
- WO-A1-98/41786
- WO-A1-2007/054131
- DE-A1- 19 608 792

## Description

### Field of the Invention

The present invention relates to a double-seat mixproof valve having a plurality of valve parts, where said valve parts comprise a body having a first cavity with a first valve seat, a second cavity with a second valve seat, and a vent cavity between the valve seats, a first valve plug with a first stem, for selectively blocking the first valve seat, a second valve plug with a second stem, for selectively blocking the second valve seat, the second valve stem having a central hollow part for guiding the first stem, a cleaning system, for selectively applying a flow of cleaning fluid to the valve parts.

### Background of the Invention

In the present application the term "double-seat mixproof valves" are applied to valves, which have at least two process cavities with a communication passage between them and two independent valve plugs with appertaining valve seats separated by a self-draining opening to atmosphere (vent) between the valve seats. The communication passage may be selectively blocked by one or both valve plugs.

Double-seat mixproof valves are used to automate distribution piping in liquid and gas systems in the process industry, where multiple processing products are involved. Examples of such a process industry are the food processing industry and the dairy industry.

The introduction of double-seat mixproof has made it possible to mechanically clean one cavity and valve seat while there is still process liquid or gas in the opposite cavity. Mechanical cleaning is soil removal by impingement, circulation, or flowing cleaning agent solutions or water rinses onto and over the surfaces of the double-seat valve to be cleaned by mechanical means. In the food processing industry it is a regulatory requirement that the cleaning fluid under no circumstances must access the opposite cavity during such cleaning operation.

Therefore the double-seat valve must employ fail-safe measures, such that cleaning fluid does not reach the opposite cavity even upon failure of blocking the communication passage between the two cavities.

Further background art is reflected in patent documents EP0646741, EP0819876, EP0090090, DE19608792, WO2007054131 and WO9841786.

### Object of the Invention

It is therefore the object of the present invention to provide a double-seat mixproof valve, which employs fail-safe measures, such that cleaning fluid does not reach the opposite cavity even upon failure of blocking the communication passage between the two cavities.

### Description of the Invention

According to the present invention, this is achieved by a double-seat mixproof valve of the type specified in the introduction and which is peculiar in that, the cleaning system comprise a leading surface on the first valve plug and a trailing surface on the second valve plug, said leading surface is adapted for guiding the flow of cleaning fluid towards a point of attack on the trailing surface, said trailing surface being adapted for receiving the flow of cleaning fluid from the leading surface, wherein the leading surface has a sharp edge at its termination, the leading surface and the trailing surface being substantially tangential at the termination of the leading surface and at the point of attack on the trailing surface.

Such a valve is especially suitable for use in an automated distribution piping system in the food processing industry and the dairy industry, where the interior of the valve may be cleaned on a regular basis while allowing production to continue during such cleaning action. The double-seat valve according to the invention employ fail-safe measures such that cleaning fluid does not reach the opposite cavity even during a failed condition, where the communication passage to a cavity is unsealed. This is achieved by preventing impingement on the seals and valve seats blocking the passage to a production cavity and by maintaining a suction on said seals during cleaning, such that failure of the seals will cause the production fluid to enter the vent cavity and not cleaning fluid to enter into the production cavity.

A leading surface is any surface on one valve part to which the cleaning fluid is applied by the cleaning system before being directed onto a trailing surface on another valve part. Impingement on the valve seats and seals are thereby prevented.

The sharp edge at the termination of the leading surface is detaching the flow of cleaning fluid, such that it becomes airborne before it enters the point of attack on the trailing surface. Backflow towards a seal to one of the production cavities is thereby prevented.

The flow of cleaning fluid is spanning the gap between the two or more valve parts and becomes airborne over the gab. This causes an ejector effect, such that suction is established at the valve seat. During a seal failure this will cause the production fluid to leak into the drain cavity, and thereby prevent the cleaning fluid to enter the production cavity.

By substantially tangential is meant an angle between the leading surface and the trailing surface equal to or less than 30°, preferably as close to 0° as possible. The angle is important when the cleaning fluid impacts the trailing surface. A small angle will direct almost all the cleaning fluid in one and the same direction with a little risk of backflow.

The opposite extreme where the cleaning fluid is directed at a surface at an angle of 90 degrees will distribute the cleaning fluid evenly in all directions. This would cause impingement at the seals and valve seats, which the present invention is preventing. In a preferred embodiment of a double-seat valve according to the invention, the valve part with the leading surface has a projecting surface opposite said leading surface, said projecting surface having a groove for forming a drip nose. The groove forming a drip nose is further preventing backflow of cleaning fluid towards the seals and valve seats.

### Description of the Drawing

The invention will be explained in more detail below with reference to the accompanying drawing, where:
- Fig. 1: shows a cross-section of a double-seat valve,
- fig. 2a: shows a cross-sectional partial view of the double seat valve according to fig. 1, wherein the first and second valve plugs are in a first position,
- fig. 2b: shows a detailed cross-sectional view A of fig. 2a,
- fig. 3a: shows a cross-sectional partial view of the double seat valve according to fig. 1, wherein the first and second valve plugs are in a second position,
- fig. 3b: shows a detailed cross-sectional view B of fig. 3a,
- fig. 4a: shows a cross-sectional partial view of the double seat valve according to fig. 1, wherein the first and second valve plugs are in a third position,
- fig. 4b: shows a detailed cross-sectional view C of fig. 4a,
- fig. 4c: shows a detailed cross-sectional view D of fig. 4b, and
- fig. 4d: shows a section cut E-E of fig. 4a.

### Detailed Description of the Invention

In the explanation of the figures, identical or corresponding elements will be provided with the same designations in different figures. Therefore, no explanation of all details will be given in connection with each single figure/embodiment.

The detailed description describes a preferred embodiment of the invention according to claims 1 through 9. The skilled person should easily be able to make an embodiment based on only one or any combination of the claims 1 through 9.

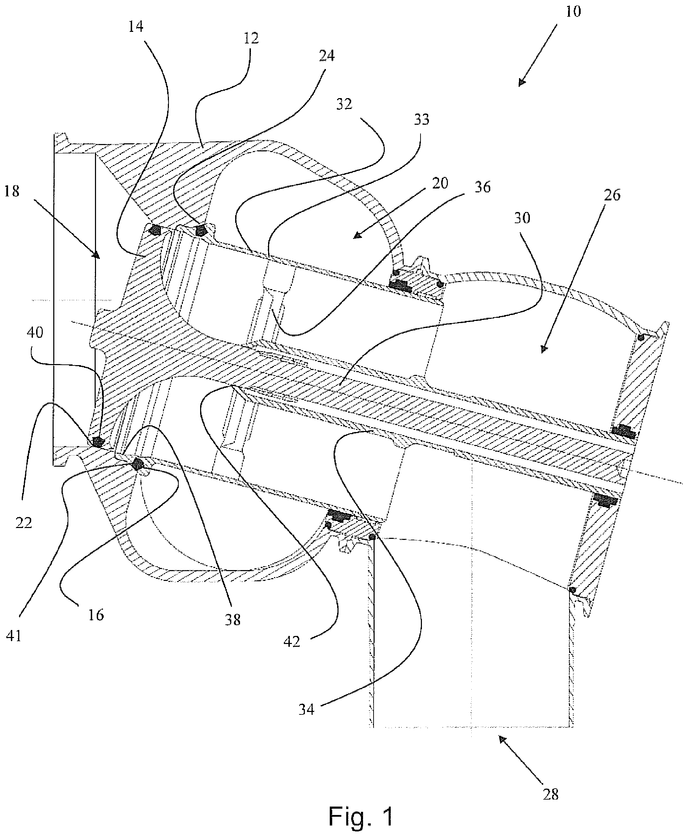

Fig. 1 shows an embodiment of a double seat mixproof valve 10 according to the invention.

The double-seat mixproof valve 10, hereinafter referred to as "valve", has a plurality of valve parts comprising a body 12, a first and second valve plug 14, 16 and a cleaning system.

The body 10 has a first and a second cavity 18, 20. The cavities 18, 20 may have one or more external connections to a distribution piping of a process system containing one or more process fluids (not shown). The valve 1 is used to distribute the process fluid within the process system (not shown) in an automated manner.

The first cavity 18 has a first valve seat 22, which is selectively blocked by the first valve plug 14. The second cavity 20 has a second valve seat 24, which is selectively blocked by the second valve plug 16. A vent cavity 26 is arranged between the first and second valve seats 22, 24. The vent cavity 26 has a self-draining opening 28 to the atmosphere. A communicating passage may be formed between the first and second cavities 18, 20.

The first valve plug 14 has a first stem 30 and the second valve plug 16 has a second stem 32. The valve plugs 14, 16 are coaxial and movable relative to each other. The first valve plug 14 is a piston type plug, with a substantially T-shaped cross section. The second stem 32 is hollow with a cylindrical wall 33, for providing an internal passage between the vent cavity 26 and the first and second cavities 18, 20 respectively. The second stem 32 further comprises a hollow central part 34 for guiding the first stem 30. The hollow central part 34 is supported by struts 36 between the cylindrical wall 33 and the hollow central part 34.

The second valve plug 16 has a third valve seat 38, which is selectively blocked by the first valve plug 14.

Each valve plug 14, 16 feature an annular seal 40, 41 for sealing against the valve seats 22, 24, 38.

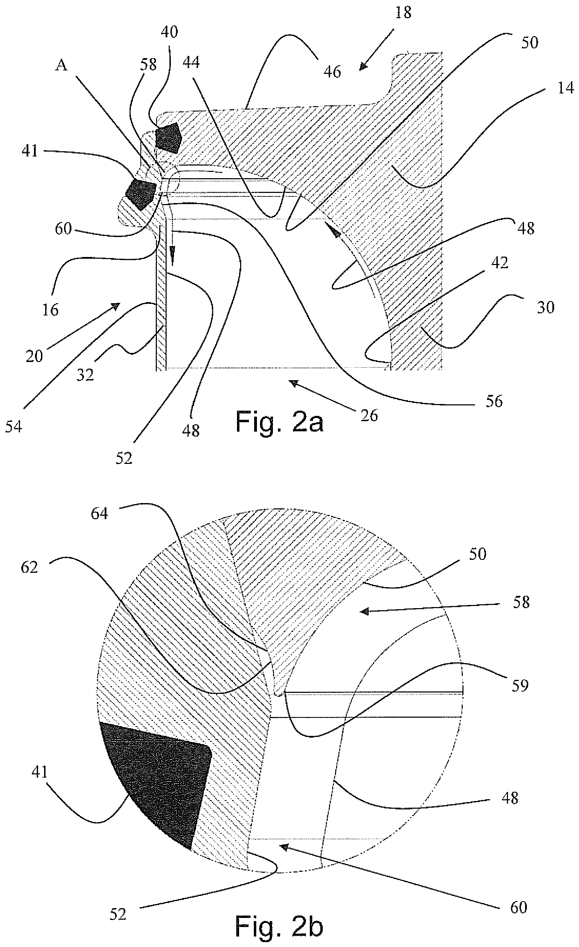

A passage between the first and second cavities 18, 20 is established by displacing the first valve plug 14 to a position where it blocks the third valve seat 38, and thereafter displacing the first and second valve plugs 14, 16 together until the second valve seat 24 is unblocked by the second valve plug 16. This is defined as the first position of the first and second valve plugs 14, 16. This position is further described in fig. 2a and 2b.

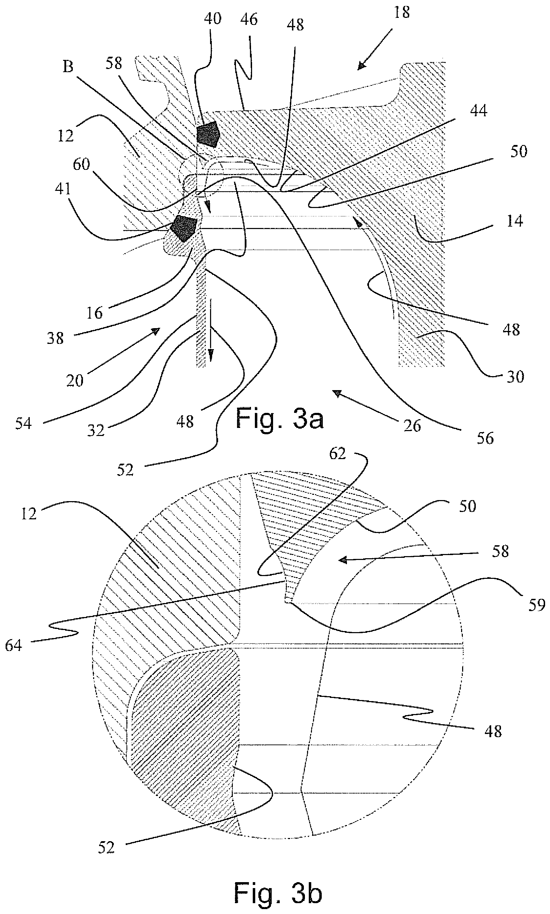

The passage between the first and second cavities 18, 20 is closed by placing the first valve plug 14 in a position where it blocks the first valve seat 22 and placing the second valve plug 16 in a position where it blocks the second valve seat 24. This is defined as the second position of the first and second valve plugs 14, 16. This position is further described in fig. 3a and 3b.

A passage between the first cavity 18 and the vent cavity 26 is established by displacing the first valve plug 14 from a position where it blocks the first valve seat 22 to an open position while the second valve plug 16 is blocking the second valve seat 24. This position is not described further.

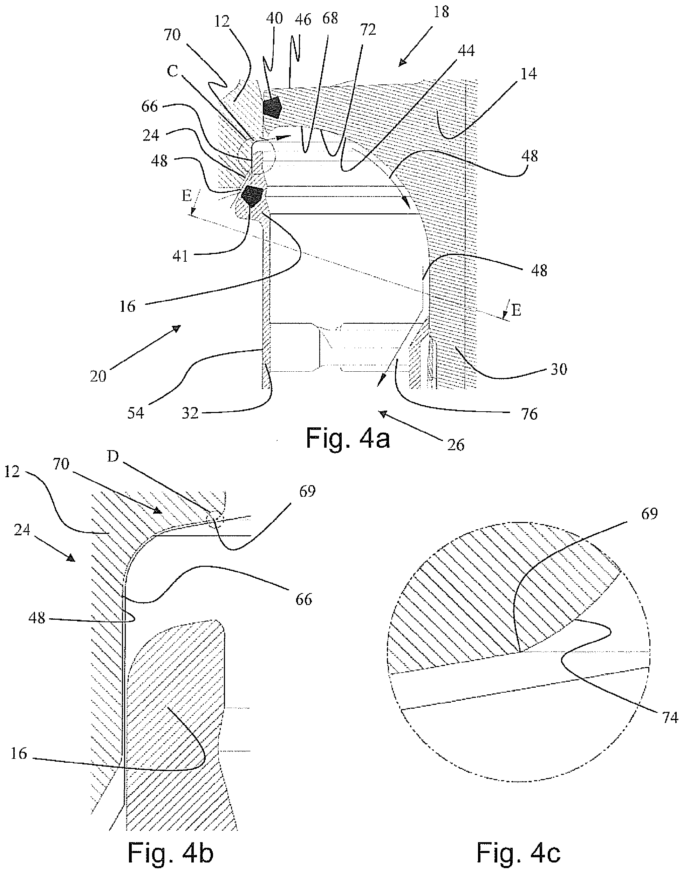

A passage between the second cavity 20 and the vent cavity 26 is established by displacing the second valve plug 16 from a position where it blocks the second valve seat 24 to an open position while the first valve plug 14 is blocking the first valve seat 22. This is defined as the third position of the first and second valve plugs 14, 16. This position is further described in fig. 4a-d.

The cleaning system comprise a nozzle means 42, which is arranged between the first stem 30 and the hollow central part 34 for selectively applying a flow of cleaning fluid 48. Cleaning fluid may also be present in the first or second cavities 18, 20 and directed through passage between the first and second cavities 18, 20 dependent on which of the valve parts are subject to being cleaned.

Fig. 2a shows a cross-sectional partial view of the valve 1 according to fig. 1, wherein the first and second valve plugs 14, 16 are in a first position. When the cleaning system is activated in the first position the following valve parts inside the vent cavity 26 are cleaned: first stem 30 and the second stem 32.

The first plug 14 has an inside surface 44 facing the vent cavity 26 and an outside surface 46 facing the first cavity 18. The nozzle means 42 is arranged between the first stem 30 and the hollow central part 34 (see fig. 1) of the second stem 32 such that the nozzle means 42 are surrounding the first stem 30, for selectively applying a flow of cleaning fluid 48 to a leading surface 50 formed on the inside surface 44 of the first plug 14.

The second plug 16 has an inside surface 52 facing the vent cavity 26 and an outside surface 54 facing the second cavity 20. A trailing surface 56 is formed on the inside surface 52.

The leading surface 50 is curved with a sharp edge at its termination 58 from where the flow of cleaning fluid 48 is directed towards a point of attack 60 on the trailing surface 56. The flow of cleaning fluid 48 is airborne between the termination 58 of the leading surface 50 and the point of attack 60 of the trailing surface 56. The flow of cleaning fluid 48 is guided to the vent cavity 26 by the trailing surface 56.

Fig. 2b shows a detailed cross-sectional view A of fig. 2a. Fig. 2b is detailing the areas of the termination 58 of the leading surface 50 and the point of attack 60 of the trailing surface 56.

The termination 58 of the leading surface 50 has a sharp edge 59, such that the flow of cleaning fluid 48 is detached from the first stem 30, thus avoiding cleaning fluid to flow towards the outside surface 46 and thereby avoiding impingement on the seal 40 of the first plug 14. Said seal 40 blocks the passage between the first cavity 18 and the vent cavity 26.

To further enhance the ability of detaching the flow of cleaning fluid 48 the first plug 14 has a projecting surface 62 opposite the leading surface 50, wherein the projecting surface 62 has a groove 64, for forming a drip nose.

The leading surface 50, at its termination 58, is substantially tangential to the trailing surface 56 at its point of attack 60, thus directing the flow of cleaning fluid 48 away from the seal 40 of the first plug 14 and preventing backflow.

The arrangement of the leading surface 50 and the trailing surface 56 establish a suction at the seal 40 of the first plug 14, by applying an ejector effect.

It is herewith achieved that the flow of cleaning fluid 48 is prevented from entering the first or second cavities 18, 20 during a failed condition of the seal 40 of the first plug 14. The valve 10 thus provides fail safe cleaning in the first position.

Fig. 3a shows a cross-sectional partial view of the double seat valve according to fig. 1, wherein the first and second valve plugs 14, 16 are in a second position. When the cleaning system is activated in the second position the following valve parts inside the vent cavity 26 are cleaned: first stem 30 and the second stem 32 including the third valve seat 38.

Fig. 3b shows a detailed cross-sectional view B of fig. 3a. Fig. 3b is detailing the areas of the leading surface 50 at its termination 58 and the trailing surface 56 at its point of attack 60.

The description and functioning of the leading surface 50 is identical to what is described for fig. 2a except for the trailing surface 56, which is extended to include the third valve seat 38, and the point of attack 60, which is located on the third valve seat 38. The point of attack 60 is located a distance from the edge of the second plug 16.

Impingement of the seal 41 of the second plug 16, which is blocking the passage between the second cavity 20 and the vent cavity 26 is avoided by the sharp edge 59 at the termination 58 of the leading surface 50, which detaches the flow of cleaning fluid 48 from the leading surface 50, the leading surface 50 at its termination 58 being substantially tangential to the trailing surface 56 at the point of attack 60, and the point of attack 60 being located a distance from the edge of the second plug 16.

The arrangement of the leading surface 50 and the trailing surface 56 establish a suction at the seals 40, 41 of the first and second plugs 14, 16 by applying an ejector effect.

It is herewith achieved that the flow of cleaning fluid 48 is prevented from entering the first or second cavities 18, 20 during a failed condition of either of the seals 40, 41 of the first and second plugs 14. The valve 10 thus provides fail safe cleaning in the second position.

Fig. 4a shows a cross-sectional partial view of the double seat valve according to fig. 1, wherein the first and second valve plugs 14, 16 are in a third position. The flow of cleaning fluid 48 is directed from the second cavity 20 to the vent cavity 26 through the passage between the second cavity 20 and the vent cavity 26. When the cleaning system is activated in the third position the following valve parts are cleaned: second valve seat 24, first stem 30, struts 36 and the outside surface 54 of the second stem 32 facing the second cavity 20.

A leading surface 66 is formed on the surface of the second valve seat 24 of the body 12, for directing the flow of cleaning fluid 48 towards a trailing surface 68 on the inside surface 44 of the first plug 14. The leading surface 50 of the first stem 30 (see figs. 2-3) in the first and second position is identical to the trailing surface 68 of the first stem 30 in the third position.

The leading surface 66 has a sharp edge 69 (see fig 4b-c) at its termination 70, where the flow of cleaning fluid 48 is detached from the leading surface 66 and directed towards a point of attack 72 on the trailing surface 68. The flow of cleaning fluid 48 is airborne between the termination 70 of the leading surface 66 and the point of attack 72 of the trailing surface 68. The flow of cleaning fluid 48 is guided towards the vent cavity 26 by the trailing surface 68.

Fig. 4b shows a detailed cross-sectional view C of fig. 4a, Fig. 4b is detailing the areas of the leading surface 66 and its termination 70. Fig. 4c shows a detailed cross-sectional view D of fig. 4b further detailing the area of the termination 70.

The termination 70 of the leading surface 66 has a sharp edge 69, such that the flow of cleaning fluid 48 is detached from the second valve seat 24 and the body 12, thus avoiding the flow of cleaning fluid 48 to continuing towards the seal 40 of the first plug 14 (see fig. 4a) and thereby avoiding impingement on the seal 40 of the first plug 14. Said seal 40 blocks the passage between the first cavity 18 and the vent cavity 26.

The body 12 has a rounding 74 after the termination 70 of the leading surface 66 at the inlet to the passage to the first cavity 18, in order to avoid excessive wear on the seal 40 of the first plug 14 as the first plug 14 is displaced between the first and second position.

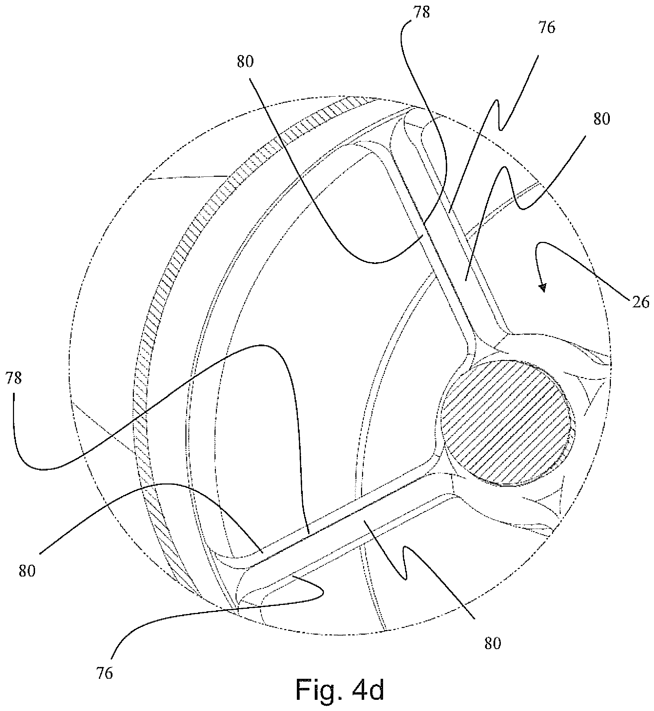

Fig. 4d shows a section cut E-E of fig. 4a.

A plurality of struts 76 are connected between the second stem 32 and the hollow central part 34. Each strut 76 has a knife-edge 78 and a chamfer 80 facing away from the vent cavity 26, such that the flow of cleaning fluid 48 is directed towards the vent cavity 26 and away from the seal 40 of the first plug 14.

The arrangement of the leading surface 66 and the trailing surface 68 establish a suction at the seal 40 of the first plug 14 by applying an ejector effect.

It is herewith achieved that the flow of cleaning fluid 48 is prevented from entering the first cavity 18 during a failed condition of the seal 40 of the first plug 14. The valve 10 thus provides fail safe cleaning in the third position.

The invention is not limited to the embodiments described above and shown on the drawings, but can be supplemented and modified in any manner within the scope of the invention as defined by the enclosed claims.

## Claims

1. A double-seat mixproof valve having a plurality of valve parts, where said valve parts comprise a body (10) having a first cavity (18) with a first valve seat (22), a second cavity (20) with a second valve seat (24), and a vent cavity (26) between the valve seats (24, 26), a first valve plug (14) with a first stem (30), for selectively blocking the first valve seat (22), a second valve plug (16) with a second stem (32), for selectively blocking the second valve seat (24), the second stem (32) having a hollow central part (34) for guiding the first stem (30), a cleaning system, for selectively applying a flow of cleaning fluid to the valve parts, **characterized in that** the cleaning system comprises a leading surface (50) on the first valve plug (14) and a trailing surface (56) on the second valve plug (16), said leading surface (50) being adapted for guiding the flow of cleaning fluid towards a point of attack (60) on the trailing surface (56), said trailing surface (56) being adapted for receiving the flow of cleaning fluid from the leading surface (50), wherein the leading surface (50) has a sharp edge (59) at its termination (58), the leading surface (50) and the trailing surface (56) being substantially tangential at the termination (58) of the leading surface (50) and at the point of attack (60) on the trailing surface (56).

2. Double-seat valve according to claim 1, **characterized in that**, the valve part with the leading surface has a projecting surface (62) opposite said leading surface, said projecting surface having a groove (64) for forming a drip nose.

3. Double-seat valve according to claims 1 or 2, **characterized in that**, the first plug has an inside surface facing the vent cavity and an outside surface facing the first cavity, wherein said inside surface is a leading surface.

4. Double-seat valve according to claim 3, **characterized in that**, a nozzle means (42) is arranged between and/or on the first stem and the hollow central part of the second stem, for selectively applying a flow of cleaning fluid to the leading surface of the first stem.

5. Double-seat valve according to claim 3 or 4, **characterized in that**, the second stem has an inside surface (52) facing the vent cavity and an outside surface facing the second cavity, wherein said inside surface is a trailing surface.

6. Double-seat valve according to claim 5, **characterized in that**, the point of attack is located substantially in continuation of a tangent to the leading surface at its termination.

7. Double-seat valve according to any preceding claim, **characterized in that**, the second valve plug further comprise a plurality of struts (36) connected between the second stem and the hollow central part.

8. Double-seat valve according to claim 7, **characterized in that**, each strut has a knife-edge facing away from the vent cavity.

9. Double-seat valve according to any of the preceding claims, **characterized in that**, the surface of the second valve seat is a leading surface.

## Patentansprüche

1. Vermischungssicheres Doppelsitzventil, das mehrere Ventilteile hat, wobei die Ventilteile einen Körper (10), der einen ersten Hohlraum (18) mit einem ersten Ventilsitz (22), einen zweiten Hohlraum (20) mit einem zweiten Ventilsitz (24) und einen Lüftungshohlraum (26) zwischen den Ventilsitzen (24, 26) hat, einen ersten Ventilstopfen (14) mit einem ersten Schaft (30), zum selektiven Blockieren des ersten Ventilsitzes (22), einen zweiten Ventilstopfen (16) mit einem zweiten Schaft (32), zum selektiven Blockieren des zweiten Ventilsitzes (24), wobei der zweite Schaft (32) einen hohlen Mittelteil (34) zum Führen des ersten Schafts (30) hat, ein Reinigungssystem, zum selektiven Aufbringen eines Stroms eines Reinigungsfluids auf die Ventilteile, umfassen, **dadurch gekennzeichnet, dass** das Reinigungssystem Folgendes umfasst:
eine vordere Fläche (50) an dem ersten Ventilstopfen (14) und eine hintere Fläche (56) an dem zweiten Ventilstopfen (16), wobei die vordere Fläche (50) dafür eingerichtet ist, den Strom von Reinigungsfluid zu einem Angriffspunkt (60) an der hinteren Fläche (56) hin zu leiten, wobei die hintere Fläche (56) dafür eingerichtet ist, den Strom von Reinigungsfluid von der vorderen Fläche (50) zu empfangen, wobei die vordere Fläche (50) eine scharfe Kante (59) an ihrem Ende (58) hat, wobei die vordere Fläche (50) und die hintere Fläche (56) an dem Ende (58) der vorderen Fläche (50) und an dem Angriffspunkt (60) an der hinteren Fläche (56) im Wesentlichen tangential sind.

2. Doppelsitzventil nach Anspruch 1, **dadurch gekennzeichnet, dass** der Ventilteil mit der vorderen Fläche eine vorspringende Fläche (62) gegenüber der vorderen Fläche hat, wobei die vorspringende Fläche eine Rille (64) zum Formen einer Tropfnase hat.

3. Doppelsitzventil nach Anspruch 1 oder 2, **dadurch gekennzeichnet, dass** der erste Stopfen eine Innenfläche, die zu dem Lüftungshohlraum zeigt und eine Außenfläche, die zu dem ersten Hohlraum zeigt, hat, wobei die Innenfläche eine vordere Fläche ist.

4. Doppelsitzventil nach Anspruch 3, **dadurch gekennzeichnet, dass** ein Düsenmittel (42) zwischen und/oder an dem ersten Schaft und dem hohlen Mittelteil des zweiten Schafts angeordnet ist, zum selektiven Aufbringen eines Stroms eines Reinigungsfluids auf die vordere Fläche des ersten Schafts.

5. Doppelsitzventil nach Anspruch 3 oder 4, **dadurch gekennzeichnet, dass** der zweite Stopfen eine Innenfläche (52), die zu dem Lüftungshohlraum zeigt und eine Außenfläche, die zu dem zweiten Hohlraum zeigt, hat, wobei die Innenfläche eine hintere Fläche ist.

6. Doppelsitzventil nach Anspruch 5, **dadurch gekennzeichnet, dass** der Angriffspunkt im Wesentlichen in Verlängerung einer Tangente zu der vorderen Fläche an ihrem Ende angeordnet ist.

7. Doppelsitzventil nach einem der vorhergehenden Ansprüche, **dadurch gekennzeichnet, dass** der zweite Ventilstopfen ferner mehrere Streben (36) umfasst, die zwischen dem zweiten Schaft und dem hohlen Mittelteil verbunden sind.

8. Doppelsitzventil nach Anspruch 7, **dadurch gekennzeichnet, dass** jede Strebe eine Schneidkante hat, die von dem Lüftungshohlraum weg zeigt.

9. Doppelsitzventil nach einem der vorhergehenden Ansprüche, **dadurch gekennzeichnet, dass** die Fläche des zweiten Ventilsitzes eine vordere Fläche ist.

## Revendications

1. Soupape à double siège anti-mélange, comportant plusieurs parties de soupape, lesdites parties de la soupape comprenant un corps (10) comportant une première cavité (18) avec un premier siège de soupape (22), une deuxième cavité (20) avec un deuxième siège de soupape (24) et une cavité de ventilation (26) entre les sièges de soupape (24, 26), un premier obturateur de soupape (14) avec une première tige (30) pour bloquer sélectivement le premier siège de soupape (22), un deuxième obturateur de soupape (16) avec une deuxième tige (32) pour bloquer sélectivement le deuxième siège de soupape (24), la deuxième tige (32) comportant une partie centrale creuse (34) pour guider la première tige (30), un système de nettoyage pour appliquer sélectivement un écoulement de fluide de nettoyage sur les parties de soupape, **caractérisée en ce que** le système de nettoyage comprend :
une surface d'attaque (50) sur le premier obturateur de soupape (14) et une surface de fuite (56) sur le deuxième obturateur de surface (16), ladite surface d'attaque (50) étant adaptée pour guider l'écoulement de fluide de nettoyage vers un point d'attaque (60) sur la surface de fuite (56) ; ladite surface de fuite (56) étant adaptée pour recevoir l'écoulement du fluide de nettoyage provenant de la surface d'attaque (50), ladite surface d'attaque (50) comportant une arête vive (59) au niveau de sa terminaison (58), la surface d'attaque (50) et la surface de fuite (56) étant sensiblement tangentielles au niveau de la terminaison (58) de la surface d'attaque (50) et au niveau du point d'attaque (60) sur la surface de fuite (56).

2. Soupape à deux sièges selon la revendication 1, **caractérisée en ce que** la partie de soupape comportant la surface d'attaque comporte une surface en saillie (62) opposée à ladite surface d'attaque, ladite surface en saillie comportant une rainure (64) pour former un nez d'égouttage.

3. Soupape à deux sièges selon les revendications 1 ou 2, **caractérisée en ce que** le premier obturateur comporte une surface intérieure faisant face à la cavité de ventilation et une surface extérieure faisant face à la première cavité, ladite surface intérieure constituant une surface d'attaque.

4. Soupape à deux sièges selon la revendication 3, **caractérisée en ce qu'**un moyen de buse (42) est agencé entre et/ou sur la première tige et la partie centrale creuse de la deuxième tige pour appliquer sélectivement un écoulement de fluide de nettoyage sur la surface d'attaque de la première tige.

5. Soupape à deux sièges selon les revendications 3 ou 4, **caractérisée en ce que** la deuxième tige comporte une surface intérieure (52) faisant face à la cavité de ventilation, et une surface extérieure faisant face à la deuxième cavité, ladite surface intérieure constituant une surface de fuite.

6. Soupape à deux sièges selon la revendication 5, **caractérisé en ce que** le point d'attaque est situé sensiblement en continuation d'une tangente à la surface d'attaque au niveau de sa terminaison.

7. Soupape à deux sièges selon l'une quelconque des revendications précédentes, **caractérisée en ce que** le deuxième obturateur de soupape comprend en outre plusieurs entretoises (36) connectées entre la deuxième tige et la partie centrale creuse.

8. Soupape à deux sièges selon la revendication 7, **caractérisée en ce que** chaque entretoise comporte une arête de couteau orientée à l'écart de la cavité de ventilation.

9. Soupape à deux sièges selon l'une quelconque des revendications précédentes, **caractérisée en ce que** la surface du deuxième siège de soupape constitue une surface d'attaque.
